# EUROPÄISCHE PATENTANMELDUNG

(11) **EP 3 865 685 A1**
(43) Veröffentlichungstag der Anmeldung: **18.08.2021**
(21) Anmeldenummer: 20156798.9
(22) Anmeldetag: 12.02.2020
(51) Int. Cl.: F01K 3/20

(54) **DAMPFKRAFTWERK UND VERFAHREN ZUM UMBAU EINES BESTEHENDEN DAMPFKRAFTWERKS**

(71) Anmelder: Siemens Aktiengesellschaft, 80333 München (DE)
(72) Erfinder: De Roo, Stephan, 40211 Düsseldorf (DE); Graeber, Carsten, 91056 Erlangen (DE); Grootens, Heiko, 96114 Hirschaid (DE); Schlehuber, Dominic, 46145 Oberhausen (DE); Wechsung, Michael, 45470 Mülheim an der Ruhr (DE)

(57) **Zusammenfassung**

Die Erfindung betrifft ein Dampfkraftwerk (2) umfassend eine Dampferzeugungseinheit (4) und einen thermischen Energiespeicher (6), wobei die Dampferzeugungseinheit (4) einen fossil gefeuerten Kessel (22) mit mindestens einem Heißlufteinlass (20) aufweist. Im Hinblick auf eine möglichst kostengünstige und effiziente Integration des thermischen Energiespeichers (6) in das Dampfkraftwerk (2) wird der Kessel (?22 mit Heißluft aus dem Energiespeicher (6) betrieben. Hierfür weist der Energiespeicher (6) einen Lufteinlass (12) sowie einen Luftauslass (16) auf, wobei an den Luftauslass (16) eine Heißluftleitung (18) angeschlossen ist, die in den mindestens einen Heißlufteinlass (20) des Kessels (22) mündet.

## Beschreibung

Die Entwicklungen am Stromerzeugungsmarkt fördern die Einführung von Energiespeichertechnologien. In diesem Zusammenhang wurde z.B. von der Firma Siemens Gamesa ein neuartiger elektro-thermischer Energiespeicher (ETES) entwickelt, bei dem überschüssiger Strom als Wärme in Vulkangestein speichert wird.

Thermische Energiespeicher sind zurzeit in Großkraftwerken kaum kommerziell verfügbar, bzw. werden diese Energiespeicher lediglich als additives System parallel zum bestehenden Kreislauf geplant. Hierbei wird zur Wärmeübertragung der eingespeicherten Wärme in den Wasser-/Dampfkreislauf ein zusätzlicher Abhitzekessel (englisch Heat Recovery Steam Generator, kurz HRSG) installiert. Dieser Abhitzekessel ist mit einem erheblichen finanziellen Mehraufwand verbunden.

Der Erfindung liegt die Aufgabe zugrunde, eine effiziente und möglichst kostengünstige Integration eines thermischen Energiespeichers in ein Dampfkraftwerk, insbesondere in ein bestehendes Dampfkraftwerk, zu ermöglichen.

Diese Aufgabe wird erfindungsgemäß gelöst durch ein Dampfkraftwerk umfassend eine Dampferzeugungseinheit und einen thermischen Energiespeicher, wobei die Dampferzeugungseinheit einen fossil gefeuerten Kessel mit mindestens einem Heißlufteinlass aufweist, wobei der Energiespeicher einen Lufteinlass sowie einen Luftauslass aufweist und wobei an den Luftauslass eine Heißluftleitung angeschlossen ist, die in den mindestens einen Heißlufteinlass des Kessels mündet.

Die Aufgabe wird weiterhin erfindungsgemäß gelöst durch ein Verfahren zum Umbau eines Dampfkraftwerks, indem eine bereits bestehende Dampferzeugungseinheit, welche einen fossil gefeuerten Kessel mit mindestens einem Heißluftanlass aufweist, durch einen thermischen Energiespeicher ergänzt wird, wobei der Kessel mit Heißluft aus dem Energiespeicher betrieben wird.

Die in Bezug auf das Dampfkraftwerk weiterhin angeführten Vorteile und bevorzugten Ausgestaltungen sind sinngemäß auf das Verfahren und vice versa zu übertragen.

Die Erfindung basiert auf der Überlegung, damit sowohl auf der Kostenseite wie auch auf der Effizienzseite ein Optimum erreicht wird, eine Anbindung des thermischen Energiespeichers an ein bestehendes Dampfkraftwerk vorzuschlagen, wobei die Integration des Energiespeichers derart konzipiert wird, dass dieser auf möglichst viele vorhandene Komponenten im Kraftwerk zurückgreift. Um den Prozess möglichst wirtschaftlich betreiben zu können, müssen die zusätzlichen Investitionskosten auf ein Minimum beschränkt werden. Besonders ist anzustreben, auch den relativ teuren Kessel weiter nutzen zu können. Im Energiespeicher wird dabei mittels Luft als Trägermedium thermische Energie eingespeichert. Beim Ausspeichern bzw. Entladen des Energiespeichers wird die Luft durch den Energiespeicher geführt, wobei die Luft Wärmeenergie aus dem Energiespeicher aufnimmt und diese dann als Heißluft dem fossil gefeuerten Kessel zugeführt wird. Der Heißluftstrom hat dabei eine Temperatur von über 700°C, insbesondere von ca. 800°C. Durch partielles Zumischen der Heißluft kann sukzessive fossiler Brennstoff für den Kesselbetrieb eingespart werden.

Bevorzugt ist der Energiespeicher ein Gesteinsspeicher. Ein elektrothermischer Energiespeicher (ETES) basiert auf dem Prinzip einer Art "Riesenfön" durch den ein Heißluftstrom erzeugt wird. Das geschieht mit Hilfe von Heizelementen und einem Gebläse. Das Gebläse ist derart ausgelegt, dass der Druck zum Fördern der Luft entlang des gesamten Heißluftpfades ausreichend ist. Im Ladebetrieb wird überschüssiger Strom dem Stromnetz entnommen und über eine Widerstandsheizung in Wärme umgesetzt. Diese Wärme wird von einem Luftstrom aufgenommen und als Heißluft auf den Steinspeicher geführt. Im kalten Speicher wird die fühlbare Wärme der Luft auf die Gesteinsmenge übertragen. Die abgekühlte Luft wird über ein Gebläse den Heizelementen im Kreislaufbetrieb wieder zugeführt. Dieser Ladevorgang kann solange laufen, bis der Speicher seine finale Ladetemperatur erreicht hat. Alternativ zur elektrothermischen Einspeicherung kann vorzugsweise eine solarthermische Einspeicherung erfolgen, bei der ein Solarturmkraftwerk die Heißluft erzeugt.

Gemäß einer bevorzugten, besonders umweltfreundlichen Ausführungsvariante ist der Energiespeicher für einen brennstoffzufuhrfreien Betrieb ausgelegt, so dass der Kessel ausschließlich mit Heißluft aus dem Energiespeicher betrieben wird. Dies bedeutet, dass im Betrieb kein Befeuerungsprozess stattfindet, sondern die Energie der Heißluft aus dem thermischen Energiespeicher ausreichend ist, um den Energiebedarf für den Betrieb des Kessels abzudecken. In diesem Fall werden nur noch die Wärmeübertragungsflächen des Kessels genutzt.

Gemäß einer weiteren, bevorzugten Ausführungsvariante ist ein geschlossener Luft-Kreislauf zwischen der Dampferzeugungseinheit und dem Energiespeicher ausgebildet, wobei die Heißluftleitung ein Teil von dem geschlossenen Luft-Kreislauf ist. Auf diese Weise wird die Effizienz des Prozesses erhöht, denn die Luft, welche aus der Dampferzeugungseinheit hinausgeführt wird, eine wesentliche höhere Temperatur als die Umgebungstemperatur aufweist und deren Wärme nicht extern abgegeben wird, sondern im geschlossenen Luftkreislauf genutzt wird.

Gemäß einer bevorzugten Ausgestaltung ist der Kessel ein Wirbelschichtkessel. Brennstoff und das Bettmaterial werden durch die Zugabe eines Fluidisierungsmediums, in diesem Fall die Heißluft, in der Schwebe gehalten. Die zerkleinerten Brennstoffpartikel haben eine große Oberfläche, so dass ein guter Ausbrand erfolgen kann. Ein Wirbelschichtkessel ist für den Einsatz im oben beschriebenen Dampfkraftwerk besonders geeignet, da beim Betrieb von diesem Typ Kessel mit Heißluft bei 700°C oder mehr, wie diese aus dem Energiespeicher in den Kessel eingeleitet wird, auf die Befeuerung bzw. auf den Zusatz von Brennstoff verzichtet werden kann.

Im Hinblick auf einen störungsfreien Betrieb mit Heißluft im geschlossenen Luftkreislauf ist dem Wirbelschichtkessel innerhalb der Dampferzeugungseinheit ein Partikelfilter nachgeschaltet. Dieser dient dazu Partikel abzufangen, die von der Luft aus dem Wirbelbett mitgerissen werden und das Gebläse beschädigen könnten, nachdem der Luftstrom den Kessel verlassen hat.

Gemäß einer alternativen Ausgestaltung ist der Kessel ein Wasserrohrkessel unterschiedlichster Bauarten wie z.B. Turmkessel mit Durchlaufdampfererzeugung, Trommelkessel, Kessel mit Rostfeuerung usw..

Im Falle, dass der Kessel, der ursprünglich als fossil gefeuerten Kessel ausgelegt war, nun durch den Einsatz des thermischen Energiespeichers ohne Brennstoff betrieben wird, ist vorzugsweise ein Brennstoffeinlass des Kessels mit der Heißluftleitung verbunden. Auf diese Weise kann mehr Luft in den Kessel einströmen, so dass insgesamt eine höhere Luftmenge im Kessel vorhanden ist, welche eine Aufrechterhaltung der hohen Temperatur und somit störungsfreien Betrieb des Kessels ermöglicht.

Vorteilhafterweise wird beim umgebauten Dampfkraftwerk eine höhere Menge an Heißluft in den Kessel zugeführt wird, insbesondere eine um Faktor 2 erhöhte Menge an Heißluft. Dies ist insbesondere dann erforderlich, wenn der Kessel ohne Befeuerungsvorgang betrieben wird, sondern die thermische Energie lediglich über die Heißluft aus dem Energiespeicher zur Verfügung gestellt wird. In diesem Fall werden am Kessel zweckdienlicherweise zusätzliche Heißlufteinlässe angebracht, durch welche die erhöhte Menge an Heißluft in den Kessel befördert wird.

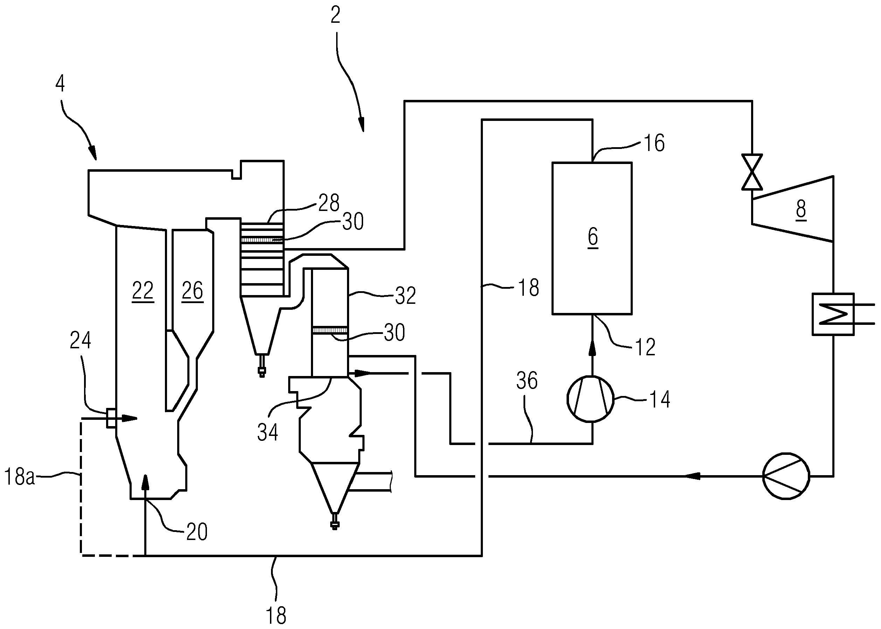

Ein Ausführungsbeispiel der Erfindung wird anhand einer Zeichnung näher erläutert. Hierin zeigt die einzige Figur ein Dampfkraftwerk 2 mit einer Dampferzeugungseinheit 4 und einem thermischen Energiespeicher 6, der als Gesteinsspeicher ausgestaltet ist. Das Dampfkraftwerk 2 umfasst weiterhin eine Dampfturbine 8, die mittels Dampf aus der Dampferzeugungseinheit 4 angetrieben wird.

Das gezeigte Dampfkraftwerk 2 ist ein umgebautes Dampfkraftwerk, welches ursprünglich die Dampferzeugungseinheit 4 und die Dampfturbine 8 umfasste und nachträglich durch den Gesteinsspeicher 6 ergänzt wurde, indem dieser in einen geschlossenen Luftkreislauf integriert wurde.

Bei der Entladung des Gesteinsspeichers 6 wird durch einen Lufteinlass 12 Luft ins Innere des Gesteinsspeichers 6 durch ein Gebläse eingepumpt, welche die im Gestein gespeicherte Wärme aufnimmt und als Heißluft durch einen Luftauslass 16 hinausströmt. Die Heißluft, die eine Temperatur von über 700°C beträgt, strömt einer Heißluftleitung 18 entlang und wird anschließend über einen Heißlufteinlass 20 einem Kessel 22, hier einem Wirbelschichtkessel mit einem Zyklon 26 zugeführt. Ein Teil der Heißluft in der Heißluftleitung 18 wird abgezapft, was durch gestrichelte Linie 18a angedeutet ist, und wird über einen Brennstoffeinlass 24 in den Wirbelschichtkessel 22 eingeleitet.

Der Wirbelschichtkessel 22 wird dabei vollständig brennstoffzufuhrfrei betrieben. Die gesamte erforderliche thermische Energie wird durch den Heißluftstrom bereitgestellt. Um dies zu ermöglichen, ist ein höherer Luftdurchsatz als beim ursprünglichen, fossil gefeuerten Betrieb des Wirbelschichtkessels 2 erforderlich, insbesondere um Faktor 2 höher. Dies wird erreicht durch bautechnische Maßnahmen zur Vergrößerung des Lufteinlasses 20, durch die Ausbildung von neuen Lufteinlässen (z.B. indem der ursprüngliche Brennstoffeinlass 24 umfunktioniert wird) und/oder durch Erhöhung des Drucks in der Heißluftleitung 18. Das Wirbelbettmaterial wird auf die neuen strömungstechnischen Verhältnisse abgestimmt, um weiterhin eine optimale Wärmeübertragung zu gewährleisten.

Darüber hinaus kann ein hier symbolisch gezeigter Partikelfilter 30 dem Zyklon 26 des Wirbelschichtkessels 22, z.B. in einem nachgeschalteten Überhitzer 28 oder einem Rauchgaszug 32 mit Wärmetauschflächen, installiert werden, um Partikel abzufangen, die von der Luft aus dem Wirbelbett hinausgeführt werden und im geschlossenen Luft-Kreislauf das Gebläse erreichen und beschädigen könnten.

Eine weitere Modifikation im Bereich des Rauchgaszugs 32 sorgt dafür, dass ein nicht mehr benötigter regenerativer Luftvorwärmer des Kessels 22 z.B. mit einer Platte 34 abgesperrt wird und so nicht mehr durchströmt wird. Die Luft verlässt die Dampferzeugungseinheit 4 über eine Luftabführleitung 36, in der das Gebläse 14 integriert ist und die in den Lufteinlass 12 des Energiespeichers 6 mündet. In der Luftabführleitung 36 beträgt die Lufttemperatur zwischen 250°C und 400°C.

Der im Kessel 22 erzeugte Dampf wird zur Dampfturbine 8 geführt und entspannt. Die dabei freigesetzte mechanische/elektrische Energie kann als Ausspeicherleistung des Systems dem Netz zugeführt werden.

Die zusätzliche Implementierung eines Abhitzekessels ist im gezeigten Ausführungsbeispiel entbehrlich, wodurch die Umrüstkosten deutlich reduziert werden. Dies führt zu einer signifikant verbesserten Wirtschaftlichkeit des Energiespeichersystems.

## Patentansprüche

1. Dampfkraftwerk (2) umfassend eine Dampferzeugungseinheit (4) und einen thermischen Energiespeicher (6), wobei die Dampferzeugungseinheit (4) einen fossil gefeuerten Kessel (22) mit mindestens einem Heißlufteinlass (20) aufweist, wobei der Energiespeicher (6) einen Lufteinlass (12) sowie einen Luftauslass (16) aufweist und wobei an den Luftauslass eine Heißluftleitung (18) angeschlossen ist, die in den mindestens einen Heißlufteinlass (20) des Kessels (22) mündet.

2. Dampfkraftwerk (2) nach Anspruch 1,
wobei der Energiespeicher (6) ein Gesteinsspeicher ist.

3. Dampfkraftwerk (2) nach Anspruch 1 oder 2,
wobei der Kessel (22) für einen brennstoffzufuhrfreien Betrieb ausgelegt ist.

4. Dampfkraftwerk (2) nach einem der vorhergehenden Ansprüche, wobei ein geschlossener Luft-Kreislauf zwischen der Dampferzeugungseinheit (4) und dem thermischen Energiespeicher (6) ausgebildet ist, wobei die Heißluftleitung (18) ein Teil von dem geschlossenen Luft-Kreislauf ist.

5. Dampfkraftwerk (2) nach einem der vorhergehenden Ansprüche, wobei der Kessel (22) ein Wirbelschichtkessel ist.

6. Dampfkraftwerk (2) nach Anspruch 5,
wobei dem Wirbelschichtkessel innerhalb der Dampferzeugungseinheit (4) ein Partikelfilter (30) nachgeschaltet ist.

7. Dampfkraftwerk (2) nach einem der Ansprüche 1 bis 4, wobei der Kessel (22) ein Wasserrohrkessel ist.

8. Dampfkraftwerk (2) nach einem der vorhergehenden Ansprüche, wobei ein Brennstoffeinlass (24) des Kessels (?) mit der Heißluftleitung (18) verbunden ist.

9. Dampfkraftwerk (2) nach einem der vorhergehenden Ansprüche,
wobei im geschlossenen Luftkreislauf ein Gebläse (14) eingebaut ist, welches dem Lufteinlass (12) des thermischen Energiespeichers (6) vorgeschaltet ist.

10. Verfahren zum Umbau eines Dampfkraftwerks (2), indem eine bereits bestehende Dampferzeugungseinheit (4), welche einen fossil gefeuerten Kessel (22) mit mindestens einem Heißlufteinlass (20) aufweist, durch einen thermischen Energiespeicher (6) ergänzt wird, wobei der Kessel (22) mit Heißluft aus dem Energiespeicher (6) betrieben wird.

11. Verfahren nach Anspruch 10,
wobei der Kessel (22) ausschließlich mit Heißluft aus dem Energiespeicher (6) betrieben wird.

12. Verfahren nach Anspruch 10 oder 11,
wobei beim umgebauten Dampfkraftwerk (2) eine höhere Menge an Heißluft in den Kessel (22) zugeführt wird, insbesondere eine um Faktor 2 erhöhte Menge an Heißluft.

13. Verfahren nach einem der Ansprüche 10 bis 12,
wobei am Kessel (22) zusätzliche Heißlufteinlässe angebracht werden.
